# EUROPÄISCHE PATENTSCHRIFT

(11) **EP 1 262 011 B1**
(45) Veröffentlichungstag und Bekanntmachung des Hinweises auf die Patenterteilung: **16.12.2009**
(21) Anmeldenummer: 01919261.6
(22) Anmeldetag: 06.02.2001
(51) Int. Cl.: H02K 15/04, H02K 15/06, H02K 41/02

(54) **VORRICHTUNG UND VERFAHREN ZUR VERLEGUNG EINER LINEARMOTORLEITUNG**
DEVICE AND METHOD FOR INSTALLING A LINEAR MOTOR LINE
DISPOSITIF ET PROCEDE POUR POSER UNE LIGNE DE MOTEUR LINEAIRE

(30) Priorität: 09.03.2000 DE 10011117
(43) Veröffentlichungstag der Anmeldung: 04.12.2002
(73) Patentinhaber: ThyssenKrupp Transrapid GmbH, 34127 Kassel (DE); Draka Industrial Cable GmbH, 42369 Wuppertal (DE)
(72) Erfinder: FUNKEN, Peter, 50226 Frechen (DE); ROSIN, Christian, 86934 Reichling (DE)
(74) Vertreter: Dahlkamp, Heinrich-Leo
(86) Internationale Anmeldenummer: PCT/EP2001/001254
(87) Internationale Veröffentlichungsnummer: WO 2001/067583

(56) Entgegenhaltungen:
- DE-A- 2 827 150
- DE-A- 3 737 719
- US-A- 4 557 038

## Beschreibung

Die Erfindung betrifft ein Verfahren und eine Vorrichtung zum Einbringen einer dreiphasigen Wechselstrom-Wicklung in die Nuten eines langgestreckten Induktors bzw. im Induktorpakete eines Linearmotors, welche mit nach unten offenen Nuten an der Unterseite einer Deckplatte eines Fahrwegs befestigt sind.

In der DE 3737 719 A1 ist ein auf der Deckplatte des Fahrwegs fahrbares Verlegefahrzeug und seine Arbeitsweise beschrieben. Der Arbeitsablauf besteht im wesentlichen aus folgenden Schritten:
- die Wicklungsstränge werden von einem auf dem Fahrzeug angebrachten Vorrat abgezogen und einer auf dem Fahrzeug befindlichen Biegevorrichtung zugeführt,
- in der Biegevorrichtung wird jeder Wicklungsstrang mäanderförmig gebogen und in gebogenem Zustand in Halterungen eingebracht,
- die Halterungen werden mit festem, den Nutabständen entsprechendem Abstand zueinander auf einem Band miteinander verbunden und
- die in den Halterungen des Bandes liegende Wicklung wird über einen Ausleger zur Unterseite der Deckplatte geführt und dort von einem Werkzeug in die Nuten des Induktors gedrückt.

Bei diesem Verfahren sind durch die Verwendung von Halterungen die Maße der Nutabstände und die der Wicklungsgeometrie (Mäandrierung) fest vorgegeben. Dieses Verfahren läßt nicht zu, daß Toleranzen oder Abweichungen in den Mäandermaßen berücksichtigt werden können.

Toleranzen oder Abweichungen treten jedoch fast immer auf. Es gibt sowohl fertigungstechnische Toleranzen, als auch Toleranzen an Stoßfugen der Induktorpakete oder des Fahrwegs. Weiterhin haben in Kurvenbereichen die Nuten keine konstanten Abstände, da einerseits die Nutabstände in der Außenbahn etwas größer sind als in der Innenbahn. Andererseits sind die Nutabstände bei Verwendung von Induktorpaketen innerhalb dieser konstant, jedoch treten bspw. zum Ausgleich der Wegunterschiede in der Außenbahn größere Induktorpaketabstände als in der Innenbahn auf. Weiterhin gibt es witterungsbedingte (thermische) Materialänderungen, die zu Abweichungen führen. Die Toleranzen können sich über lange Strecke zu merkbaren Abmessungsdifferenzen addieren.

Der Erfindung liegt das technische Problem zugrunde, eine Vorrichtung und ein Verfahren anzugeben, weiche das automatische Verlegen auch bei Maßabweichungen der Nutabstände erlauben.

Die Lösung wird als Vorrichtung in den Merkmalen des Hauptanspruchs und als Verfahren in einem Nebenanspruch wiedergegeben. Weitergehende Ausgestaltungen sind in den Unteransprüchen zu finden.

Die Vorrichtung zum Verlegen für mindestens eine Linearmotorleitung in die Nuten eines Induktors weist mindestens ein Fahrzeug auf, das auf der Deckplatte bewegbar ist. Wie noch dargestellt wird, umfaßt die Verlegevorrichtung umfangreiche technische Aufbauten, so daß es angebracht sein kann, Module der Verlegevorrichtung auf mehrere Fahrzeuge zu verteilen, die als Zug über die Deckplatte bewegbar sind. Wegen des großen Gewichts des technischen Materials kann es auch angezeigt sein, die Verlegevorrichtung - insbesondere bezüglich des Leitungsvorrats - mit einer Einrichtung zum Ausgleich der Fahrwegquerneigung der Deckplatte auszurüsten. Als Beispiel für einen Induktor kann etwa die Beschreibung aus der DE 196 20 222 CI herangezogen werden.

Die Verlegevorrichtung weist vorzugsweise auf einen Leitungsvorrat, in der Regel auf einer Kabelspule; eine Einrichtung zum Abziehen der Leitung und Zuführen der Leitung zu einer Formeinrichtung, in der die Leitung zu Mäandern gebogen und gekröpft wird; ein Werkzeug zum Einfügen der Mäander in die Nuten; einen Montageschlitten, auf dem die Formvorrichtung, das Werkzeug und eine Meßanordnung für Nutenabstände angeordnet sind, wobei der Montageschlitten zumindest teilweise unter dem Fahrweg angeordnet ist und relativ zum Fahrzeug in Längs- und Querrichtung verschoben werden kann; einen Rechner oder eine Datenverarbeitungs- und Steuerungseinheit zur Verarbeitung von Meßdaten und Steuerung der Position der Formvorrichtung, des Montageschlittens und/oder des Werkzeugs.

Die wesentlichen Schritte des Verlegeablaufs - für eine Phase des Induktors - besteht in folgendem: die Verlegevorrichtung - im folgenden auch kurz als Fahrzeug bezeichnet - bewegt sich, vorzugsweise mit konstanter Geschwindigkeit auf der Deckplatte, die Leitung wird kontinuierlich der Kabelspule abgezogen und in den Montageschlitten überführt, auf dem Montageschlitten werden von einer Meßanordnung die Nutenabstände gemessen und die Maße an die Formvorrichtung übermittelt, die Biegevorrichtung formt taktweise zwei Biegungen eines Mäanders nach den vorgegebenen Maßen, die beiden Biegungen werden von einer Kröpfstation übernommen und je nach Phase oder nach Nutenposition gekröpft, aus der Kröpfstation werden die Mäander vom Eindrückwerkzeug übernommen und in die Nuten eingedrückt.

Der Bewegungsablauf des Montageschlittens besteht aus einem Stillstand in Bezug auf Nuten und Deckplatte und aus einer vorzugsweise gegenüber dem Fahrzeug überholenden Bewegung auf die nächste Eindrückposition. Während des Stillstands werden die Mäander in die Nuten eingedrückt.

Der Verlegevorgang wiederholt sich dreimal für jede Phase des Induktors auf jeder Seite der Deckplatte. Dazu kann die Verlegevorrichtung für jede Phase einen Montageschlitten mit zugehöriger Ausrüstung aufweisen, so daß in einem Durchgang die Leitungen für alle drei Phasen verlegt werden können. In einer einfacheren Version weist die Vorrichtung nur einen Montageschlitten auf, so daß pro Durchgang die Leitung nur einer Phase verlegt werden kann.

Das Fahrzeug weist eine Einrichtung (vorzugsweise ein Lasermeßsystem als optoelektronische Einrichtung) zum Messen und Übermitteln der Induktornutabstände je Phase; die Messung kann bei Stillstand oder während der Bewegung des Montageschlittens erfolgen. Die gemessenen Nutabstände werden an die Biegevorrichtung übermittelt, so daß die Mäander der Linearmotorleitung gemäß den Meßdaten geformt werden.

Auf dem Fahrzeug ist weiterhin in bevorzugter Weise eine Temperaturmeßeinrichtung vorhanden. Die aktuelle Temperatur wird der Datenverarbeitungs- und Steuerungseinheit übermittelt, die damit die Biegevorrichtung und/oder die Position des Schlittens steuert, so daß Abweichungen der Meßtemperatur von einer vorgegebenen Solltemperatur in Änderungsgrößen (Zu- oder Abschlägen) der Biegelängen der Mäander umgerechnet und übermittelt werden.

Das Eindrückwerkzeug wird kraftmäßig über eine Kraft-WegMessung überwacht und mit einer im Rechner hinterlegten Sollkurve (Hüllkurve) verglichen. Während des Eindrückens in die Nut muß ein erster Eindrückwiderstand überwunden werden, nach vollständigem Eindrücken baut sich ein zunehmender Widerstand auf. Abweichungen vom Kraftverlauf lassen auf fehlerhafte Montage schließen. Der automatische Montageablauf wird daher an dieser kritischen Stelle besonders überwacht und unterbrochen, wenn die Kraftüberwachungseinrichtung- fehlerhafte Abläufe signalisiert, die zu einer unzulässigen Verformung der Leitung führen können.

Ein Ausführungsbeispiel der Erfindung wird in der Zeichnung dargestellt. In der Zeichnung zeigen
- Fig. 1: zwei Ausführungsbeispiele von erfindungsgemäßen Verlegevorrichtungen,
- Fig. 2: eine Seitenansicht auf den Montageschlitten,
- Fig. 3: eine Seitenansicht auf die Wicklungsköpfe,
- Fig. 4: die Biegevorrichtung und
- Fig. 5: eine Anordnung nach dem Stand der Technik.

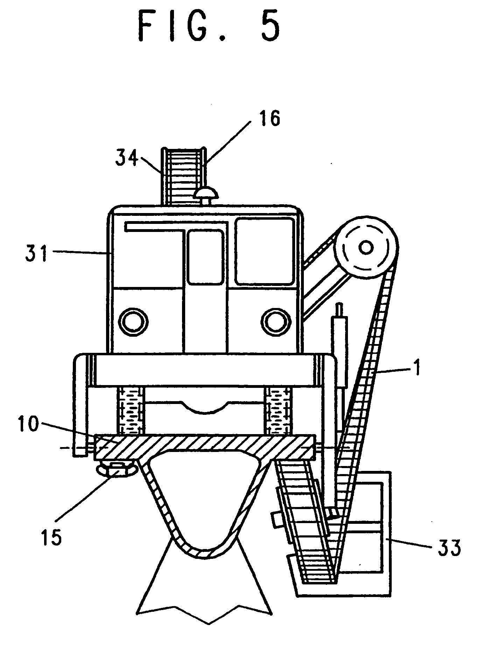

In Fig. 5 ist eine Verlegeanordnung nach dem Stand der Technik dargestellt. Man erkennt ein Verlegefahrzeug 31 auf der Deckplatte 10 des Fahrwegs. Von einer Kabelspule 34 wird die Leitung entnommen und im Fahrzeug zu Mäandern geformt und in Halterungen eingebracht. Die Halterungen werden auf dem Band 1 miteinander verbunden und über einen Ausleger 33 zur Unterseite der Deckplatte geführt und dort mit einem Werkzeug im Induktor 15 angebracht.

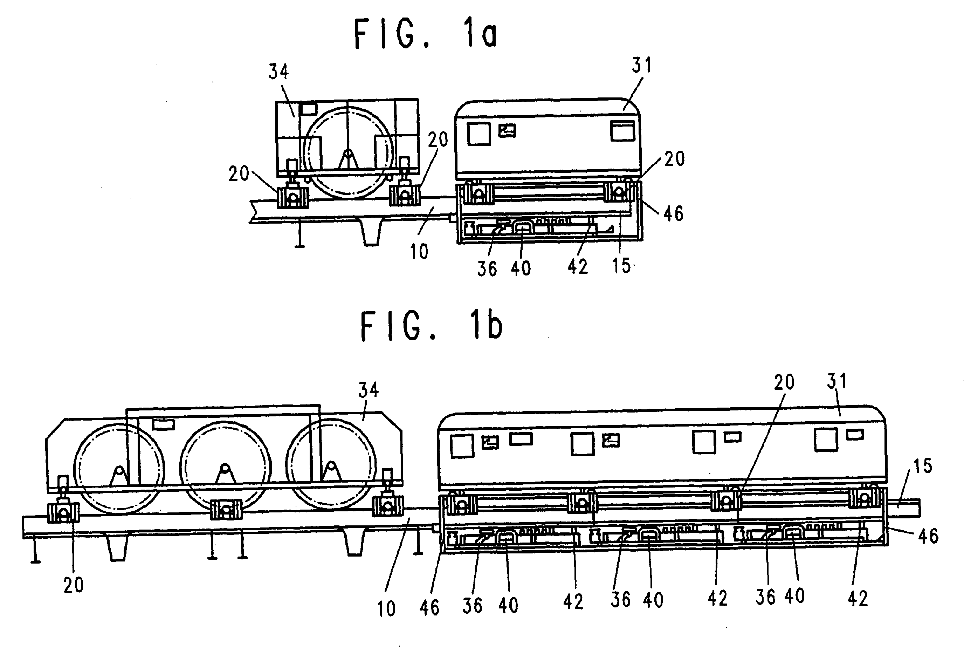

Die vorliegende Erfindung macht von auf einem Band befestigte Halterungen keinen Gebrauch. In den Fig. 1a und 1b sind erfindungsgemäße Vorrichtungen im Überblick in einer Seitenansicht darstellt. Der Unterschied zwischen den beiden Vorrichtungen in Fig. 1a und 1b besteht darin, daß die in Fig. 1a dargestellte Vorrichtung zum Verlegen einer Leitung nur einer Phase geeignet ist, während die in Fig. 1b dargestellte Vorrichtung während eines Durchganges die Leitungen von drei Phasen verlegen kann. Abgesehen von diesem Unterschied weisen beide Vorrichtungen entsprechende Merkmale auf.

Zunächst weist die Vorrichtung ein Fahrzeug 31 auf, das auf der Deckplatt 10 bewegbar ist. Weiterhin ist ein Vorrat 34 für eine bzw. drei Leitungen 16 vorgesehen, wobei der Vorrat 34 jeweils als separates Fahrzeug ausgebildet ist. Das Fahrzeug 31 und der Vorrat 34 weisen für eine Bewegung entlang der Deckplatte 10 entsprechend ausgebildete Führungselemente 20 auf. Somit bilden das Fahrzeug 31 und der Vorrat 34 einen Zug, der sich während des Verlegens entlang der Deckplatte 10 bewegt.

Mit dem Fahrzeug 31 ist jeweils ein Montageschlitten 46 verbunden, der die Deckplatte 10 umgreift und teilweise unterhalb der Deckplatte 10 angeordnet ist. Auf dem Montageschlitten 46 ist für jede Leitung 16 einer Phase eine Einrichtung 36, 40 zum Formen der Mäander der Leitung 16 und ein Werkzeug 42 zum Eindrücken der Leitung 16 in die Nuten 14 vorgesehen. Weiterhin ist auf dem Montageschlitten 46 eine Einrichtung 35 zum Abziehen der Leitung 16 vom Vorrat 34 und zum Zuführen der Leitung 16 zur Einrichtung 35 angeordnet.

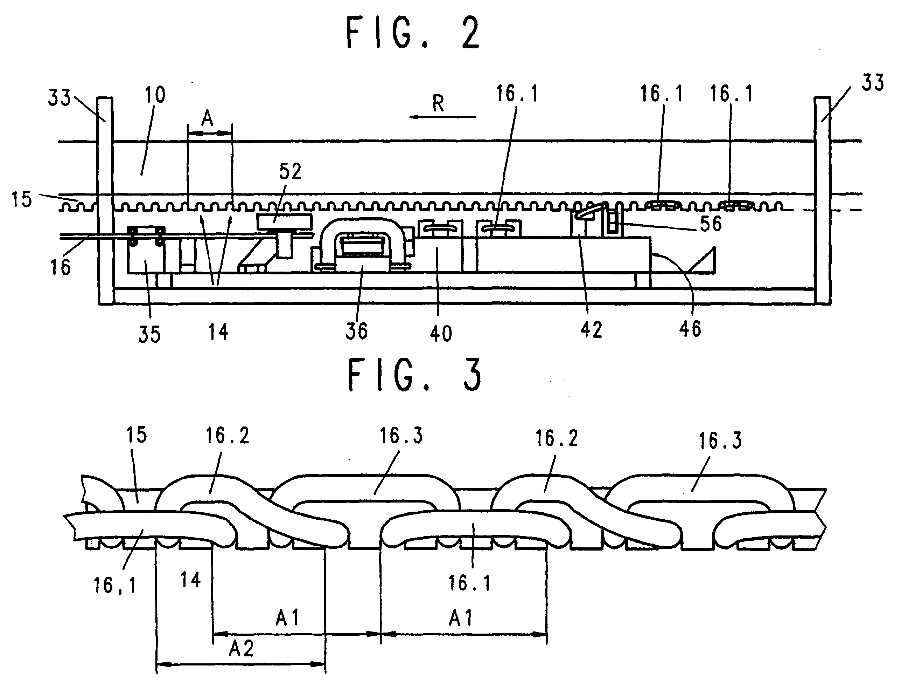

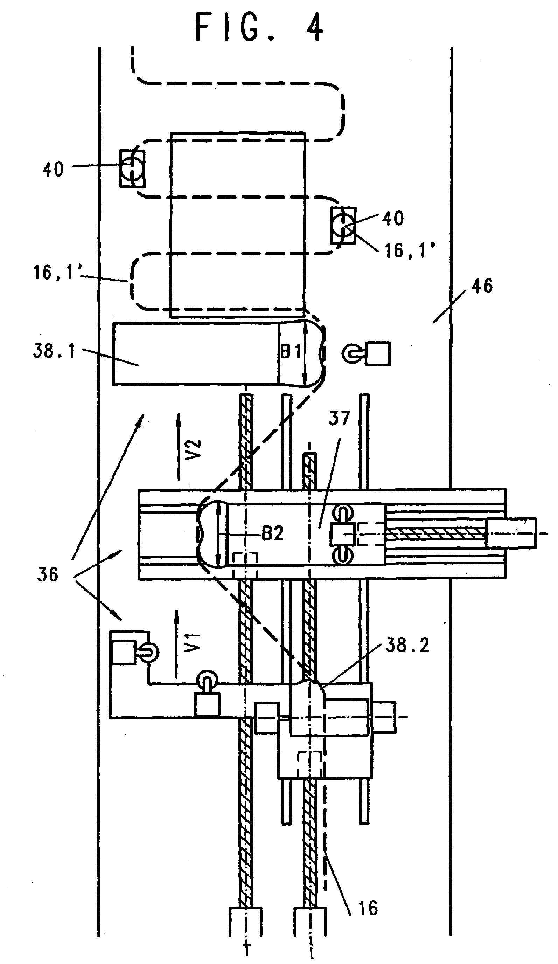

Diese Situation ist in Fig. 2 in einer Seitenansicht im Detail dargestellt. Unter dem Fahrweg 10 ist der Induktor 15 mit den Nuten 14 erkennbar. Die Leitung 16 wird von links kommend über eine Abzieheinrichtung 35 in das Montagemodul eingeführt. Das Montagemodul befindet sich in einem Rahmen 33, der als Ausleger am Fahrzeug befestigt ist und der die Deckplatte 10 des Fahrwegs seitlich umgreift. Im Montagemodul ist relativ 30 zum Fahrzeug oder zum Rahmen 33 ein Montageschlitten 46 beweglich angeordnet. Das Fahrzeug 31 bewegt sich bei der Montage in Richtung des Pfeils R. Die einer Phase zugehörigen Nuten 14 haben einen Abstand A, der von einer Laser-Meßeinrichtung 52 optisch abgetastet wird. Mit den von einem Rechner verarbeiteten Meßdaten der Nutabstände werden in der Biegevorrichtung 36 (siehe Fig. 4) zwei Biegungen des Mäanders gebogen. Taktweise werden die beiden Biegungen des Mäanders in die Kröpftstation 40 weitergegeben, in der die Wicklungsköpfe 16.1 der Mäander gekröpft werden. Die Kröpfung wird in der Beschreibung der Fig. 3 näher erläutert. Am Ende des Montageschlittens 46 befindet sich die Eindrückstation 42, mit der die Leitung 16 in die Nuten 14 eingedrückt wird. Die Eindrückstation 42 wird von einer Kraft-Weg-Meßstation 56 überwacht. Weiterhin sind eine Temperaturmeßeinrichtung und ein Rechner vorhanden; diese sind nicht in den Figuren dargestellt.

Mit der dargestellten Montageeinheit wird jeweils eine Seite des Induktors 15 mit Leitungsmäandern einer Phase bestückt. Zur vollständigen Verlegung des Induktors müssen auf beiden Seiten der Deckplatte drei Phasen der Leitung untergebracht werden.

In Fig. 3 sind die Kröpfungen der Mäander sichtbar. Die Kröpfungen sind erforderlich, weil sich die Wicklungsköpfe 16.1, 16.2, 16.3 überkreuzen. Durch das Übereinanderlegen der Wicklungsköpfe kann der vorhandene Raum optimal ausgefüllt werden. Der Mäander (hier 16.1) einer ersten Phase des Induktors hat keine Kröpfung, bei der zweiten Phase wird nur ein Wicklungskopf (hier 16.2) einseitig nach oben abgewinkelt und in der dritten Phase sind beide Wicklungsköpfe (hier 16.3) nach oben gekröpft. Die Nutabstände zweier Phasen sind mit den Bezugszeichen A1 und A2 gekennzeichnet, wobei A1 und A2 die Abstände für die sichtbaren Wicklungsköpfe 16.1 und 16.2 sind und das Bezugszeichen A1' der Abstand des entsprechenden Wicklungskopfs auf der Rückseite des Induktors ist (zur der Innenseite der Deckplatte hin angeordnet).

Die Fig. 4 zeigt schematisch die Biegevorrichtung 36 im Montageschlitten 46 von oben. Die Achse der Leitung 16 ist durch eine strichpunktierte Linie dargestellt. Die Leitung wird von links kommend in die Biegestation 36 übernommen, welche aus einem Biegestößel 37 und zwei Gegenlagern 38.1, 38.2 besteht. Vor dem Biegevorgang werden die Breitenmaße B1, B2 des Biegestößels 37 und des ersten Gegenlagers 38.1 nach den Vorgaben des Rechners eingestellt. Die Breitenmaße B1, B2 entsprechen den Meßdaten der Nutabstände A1, A2 korrigiert mit den temperaturmäßigen Zu- oder Abschlägen. Entsprechend der Breitenmaße wird der Montageschlitten nach den Vorgaben des Rechners positioniert, so daß beim Eindrücken in die Nuten keine Seitenabweichung vorliegt. Während des Biegevorgangs, bei dem die Leitung am feststehenden Gegenlager 38.1 fixiert wird, führt der Biegestößel 37 zwei Bewegungen aus. Er bewegt sich senkrecht zum Fahrweg und auf das erste Gegenlager 38.1 zu mit einer ersten Geschwindigkeit vl. Das zweite Gegenlager 38.2 bewegt sich gleichzeitig mit der doppelten Geschwindigkeit v2 unter Einholung von Leitungslänge auf das erste Gegenlager 38.1 zu. Die gebogenen Mäander werden dann taktweise von der Kröpftstation 40 übernommen, wo der innere und der äußere Wickelkopf gekröpft wird.

## Patentansprüche

1. Vorrichtung zum Verlegen mindestens einer Linearmotorleitung in die Nuten (14) eines unterhalb einer Deckplatte (10) angeordneten Induktors (15),
- mit einem auf der Deckplatte (10) bewegbaren Fahrzeug (31),
- mit einem Vorrat (34) an Leitung (16),
- mit einer Einrichtung (36, 40) zum Formen der Mäander der Leitung (16),
- mit einer Einrichtung (35) zum Abziehen der Leitung (16) vom Vorrat (34) und zum Zuführen der Leitung (16) zur Einrichtung (35) und
- mit einem Werkzeug (42) zum Eindrücken der Leitung (16) in die Nuten (14),
**dadurch gekennzeichnet,**
- **daß** ein relativ zum Fahrzeug (31) bewegbarer Montageschlitten (46) vorgesehen ist, der zumindest teilweise unterhalb der Deckplatte (10) angeordnet ist und auf dem die Einrichtung (36, 40) und das Werkzeug (42) angeordnet sind,
- **daß** eine Meßeinrichtung (52) zur Messung der Position und der Abstände (A) der Nuten (14) vorgesehen ist und
- **daß** ein Rechner zur Verarbeitung von Meßdaten und zur Steuerung der Position des Montageschlittens (46), der Formvorrichtung (36,40) und des Werkzeugs (42) vorgesehen ist.

2. Vorrichtung nach Anspruch 1, **dadurch gekennzeichnet daß** der Montageschlitten,(96) in Längsrichtung zum Fahrzeug (31) bewegbar ist.

3. Vorrichtung nach Anspruch 1, **dadurch gekennzeichnet, daß** der Montageschlitten (46) in Querrichtung zum Fahrzeug (31) bewegbar ist.

4. Vorrichtung nach Anspruch 1, 2 oder 3 **dadurch gekennzeichnet, daß** die Einrichtung (36,40) eine Einrichtung (37,38) zum Formen der Mäander und eine Einrichtung (40) zum Kröpfen der Wicklungsköpfe (16.1,16.2,16.3) aufweist.

5. Vorrichtung nach einem der vorhergehenden Ansprüche, **dadurch gekennzeichnet, daß** die Meßeinrichtung (52) eine optoelektronische Einrichtung ist.

6. Vorrichtung nach einem der vorhergehenden Ansprüche, **dadurch gekennzeichnet, daß** eine Einrichtung (56) zur Messung der Kraft oder des Wegs während des Eindrückens der Leitung (16) in die Nuten (14) vorgesehen ist.

7. Vorrichtung nach einem der vorhergehenden Ansprüche, **dadurch gekennzeichnet, daß** eine Temperaturmeßvorrichtung vorgesehen ist.

8. Verfahren zum Verlegen mindestens einer Linearmotorleitung in die Nuten (14) eines unterhalb einer Deckplatte (10) angeordneten Induktors (15), insbesondere mit einer Vorrichtung nach einem der Ansprüche 1 bis 7,
- bei dem ein Fahrzeug (31) oberhalb der Deckplatte (10) angetrieben wird,
- bei dem die Leitung (16) von einem Vorrat (34) abgezogen wird,
- bei dem die Leitung (16) mit Hilfe eines Werkzeuges (36, 40) mäanderförmig geformt wird und
- bei dem die Leitung (16) in die Nuten (14) eingefügt wird,
**dadurch gekennzeichnet,**
- **daß** ein Montageschlitten (33) relativ zum Fahrzeug (31) angetrieben wird, auf dem die Einrichtung (36, 40) und das Werkzeug (42) angeordnet sind,
- **daß** die Positionen und die Abstände (A) der Nuten (14) von einer Meßeinrichtung (52) ermittelt und an einen Rechner übergeben werden,
- **daß** die Mäander der Leitung von einer Einrichtung (36,40) hergestellt werden,
- **daß** die Leitung (16) in die Nuten (14) eingedrückt wird und
- **daß** die Position des Montageschlittens (46) und die Funktion von Einrichtung (36,40) und des Werkzeugs (42) vom Rechner mit den Meßdaten der Positionen und Abstände A) der Nuten.(14) gesteuert werden.

9. Verfahren nach Anspruch 8, **dadurch gekennzeichnet, daß** sich das Fahrzeug (31) mit konstanter Geschwindigkeit bewegt.

10. Verfahren nach Anspruch 9, **dadurch gekennzeichnet, daß** der Montageschlitten (46) so relativ zum fahrenden Fahrzeug (31) bewegt wird, daß der Montageschlitten (46) während des Einfügens der Leitung (16) in die Nuten (14) im wesentlichen relativ zu den Nuten (14) ruht.

11. Verfahren nach einem der Ansprüche 8 bis 10, **dadurch gekennzeichnet, daß** die Nutabstände (A) elektrooptisch gemessen werden.

12. Verfahren nach einem der Ansprüche 8 bis 11, **dadurch gekennzeichnet, daß** im Rechner Meßdaten (A) der Nutabstände (14) zur Steuerung der Biegevorrichtung (37,38) und/oder der Position des Montageschlittens (46) verarbeitet werden.

13. Verfahren nach einem der Ansprüche 8 bis 12, **dadurch gekennzeichnet, daß** die aktuelle Temperatur ermittelt und diese zur Steuerung der Einrichtung (36,40) und/oder der Position des Montageschlittens (46) verarbeitet wird.

14. Verfahren nach Anspruch 13, **dadurch gekennzeichnet, daß** im Rechner Meßdaten der aktuellen Temperatur zur Steuerung der Biegevorrichtung (37,38) und/oder der Position des Montageschlittens (46) verarbeitet werden.

15. Verfahren nach einem der Ansprüche 8 bis 14, **dadurch gekennzeichnet, daß** die Funktion des Werkzeugs (42) überwacht wird und Abweichungen von einer Sollfunktion signalisiert werden.

## Claims

1. A device for laying at least one linear motor line into the grooves (14) of an inductor (15) which is situated underneath a cover plate (10), said device being comprised of
- a vehicle (31) that can be moved on the cover plate (10)
- a supply (34) of line (16)
- a device (36, 40) for forming the meander of the line (16)
- a device (35) for drawing the line (16) from the supply (34) and for delivering the line (16) to the device (35), and
- a tool (42) for pressing the line (16) into the grooves (14),
**characterized in that**
- an assembly slide (46) which can be moved relatively to the vehicle (31) is provided for, which is situated at least partly underneath the cover plate (10) and on which the device (36, 40) and the tool (42) are located;
- a measuring device (52) for measuring the position and spacings (A) of grooves (14) is provided for;
- a computer for processing of measuring data and for controlling the position of the assembly slide (46), forming device (36, 40), and tool (42) is provided for.

2. A device pursuant to Claim 1, **characterized in that** the assembly slide (46) can be moved in longitudinal direction to the vehicle (31).

3. A device pursuant to Claim 1, **characterized in that** the assembly slide (46) can be moved in transverse direction to the vehicle (31).

4. A device pursuant to Claim 1, 2, or 3, **characterized in that** the device (36, 40) is comprised of a facility (37,38) for forming the meanders and a facility (40) for crimping the winding heads (16.1, 16.2, 16.3).

5. A device according to any one of the preceding claims, **characterized in that** the measuring device (52) is an optoelectronic facility.

6. A device according to any one of the preceding claims, **characterized in that** a facility (56) for measuring the power or the way during indentation of the line (16) into the grooves (14) is provided for.

7. A device according to any one of the preceding claims, **characterized in that** a temperature-measuring device is provided for.

8. A method for laying at least one linear motor line into the grooves (14) of an inductor (15) situated underneath a cover plate (10), particularly with a device according to any one of the preceding claims 1 to 7,
- in which a vehicle (31) is driven above the cover plate (10);
- in which the line (16) is pulled-off from a supply (34)
- in which the line (16) is formed like a meander, using a tool (36, 40), and
- in which the line (16) is joined into the grooves (14),
**characterized in that**
- an assembly slide (33) is driven relatively to the vehicle (31), on which the device (36, 40) and the tool (42) are accommodated;
- the positions and spacings (A) of the grooves (14) are determined by a measuring device (52) and transmitted to a computer;
- the meanders of the line are fabricated by a device (36, 40);
- the line (16) is pressed into the grooves (14); and
- the position of the assembly slide (46) and the function of the facility (36,40) and of the tool (42) are controlled by the computer with the measuring data of the positions and spacings (A) of the grooves (14).

9. A method pursuant to Claim 8, **characterized in that** the vehicle (31) moves at a constant speed.

10. A method pursuant to Claim 9, **characterized in that** the assembly slide (46) is moved relatively to the riding vehicle (31) that the assembly slide (46) rests relatively to the grooves (14) when the lines (16) are joined into the grooves (14).

11. A method pursuant to any one of Claims 8 to 10, **characterized in that** the groove spacings (A) are measured electro optically.

12. A method pursuant to any one of Claims 8 to 11, **characterized in that** measuring data (A) of the groove spacings (14) are processed in the computer to control the bending device (37, 38) and/or the position of the assembly slide (46).

13. A method pursuant to any one of the preceding claims 8 to 12, **characterized in that** the current temperature is determined and processed for controlling the facility (36,40) and/or the position of the assembly slide (46).

14. A method pursuant to Claim 13, **characterized in that** measuring data of the current temperature are processed in the computer to control the bending device (37/38) and/or the position of the assembly slide (46).

15. A method pursuant to any one of Claims 8 to 14, **characterized in that** the function of the tool (42) is monitored and that deviations from a design function are signalized.

## Revendications

1. Dispositif pour poser au moins une conduite de moteur linéaire dans les rainures (14) d'un inducteur (15) placé au-dessous d'une plaque de recouvrement (10)
- avec un véhicule (31) pouvant se déplacer sur la plaque de recouvrement (10)
- avec une réserve (34) de conduites (16),
- avec un dispositif (36, 40) pour former les méandres de la conduite (16),
- avec un dispositif (35) pour tirer la conduite (16) de la réserve (34) et pour amener la conduite (16) à l'équipement (35) et
- avec un outil (42) pour enfoncer la conduite (16) dans les rainures (14),
**caractérisé en ce qu'**
- qu'est prévu un chariot de montage (31) pouvant se déplacer par rapport au véhicule (31), étant situé, au moins en partie, au-dessous de la plaque de recouvrement (10) et sur lequel le dispositif (36, 40) et l'outil (42) sont installés,
- qu'un dispositif de mesure (52) est prévu pour la mesure de la position et des écarts (A) des rainures (14) et
- qu'un ordinateur est prévu pour le traitement des données de mesure et la commande de la position du chariot de montage (46), du dispositif pour former les conduites (36, 40) et de l'outil (42).

2. Dispositif selon la revendication 1, **caractérisé en ce que** le chariot de montage (46) peut se déplacer dans le sens longitudinal par rapport au véhicule (31).

3. Dispositif selon la revendication 1, **caractérisé en ce que** le chariot de montage (46) peut se déplacer dans le sens transversal (46) par rapport au véhicule (31).

4. Dispositif selon la revendication 1, 2 ou 3, **caractérisé en ce que** le dispositif (36, 40) présente un dispositif (37, 38) pour former les méandres et un dispositif pour onduler les têtes de bobine (16.1, 16.2, 16.3).

5. Dispositif selon une des revendications précédentes, **caractérisé en ce que** le dispositif de mesure (52) est un dispositif optoélectronique.

6. Dispositif selon une des revendications précédentes, **caractérisé en ce qu'**est prévu un dispositif (56) de mesure de l'effort ou de la course pendant l'enfoncement de la conduite (16) dans les rainures (14).

7. Dispositif selon une des revendications précédentes, **caractérisé en ce qu'**est prévu un dispositif de mesure de la température.

8. Dispositif pour poser au moins une conduite de moteur linéaire dans les rainures (14) d'un inducteur (15) placé au-dessous d'une plaque de recouvrement (10), en particulier avec un dispositif selon une des revendications 1 à 7,
- un véhicule (31) étant translaté au-dessus d'une plaque de recouvrement (10),
- la conduite (16) étant tirée d'une réserve (34),
- la conduite (16) étant formée sous forme de méandres au moyen d'un outil (36, 40) et
- la conduite (16) étant insérée dans les rainures,
**caractérisé en ce**
- **qu'**un chariot de montage (33) sur lequel le dispositif (36, 40) et l'outil (42) sont installés est translaté (31) par rapport au véhicule (31),
- **que** les positions et les écarts (A) des rainures (14) sont déterminés par un dispositif de mesure (52) et transmis à un ordinateur,
- **que** les méandres de la conduite sont formés au moyen d'un dispositif (36, 40),
- **que** la conduite (16) est enfoncée dans les rainures (14) et
- **que** la position du chariot de montage (46) et la fonction du dispositif (36, 40) et de l'outil (42) sont commandées par l'ordinateur sur la base des données de mesure des positions et des écarts (A) des rainures (14).

9. Procédé selon la revendication 8, **caractérisé en ce que** le véhicule (31) se déplace à une vitesse constante.

10. Procédé selon la revendication 9, **caractérisé en ce que** le chariot de montage (46) est déplacé par rapport au véhicule (31) de manière telle que le chariot de montage (46) est immobilisé pendant l'insertion de la conduite (16) dans les rainures (14) pour l'essentiel relativement aux rainures (14).

11. Procédé selon une des revendications 8 à 10, **caractérisé en ce que** les écarts entre les rainures (A) sont mesurés au moyen d'un dispositif optoélectronique.

12. Procédé selon une des revendications 8 à 11, **caractérisé en ce que** des données de mesure (A) des écarts entre les rainures (14) sont traitées dans l'ordinateur pour permettre la commande du dispositif de pliage (37, 38) et/ou de la position du chariot de montage (46).

13. Procédé selon une des revendications 8 à 12, **caractérisé en ce que** la température actuelle est déterminée et qu'elle est traitée pour permettre la commande du dispositif de pliage (37, 38) et/ou de la position du chariot de montage (46).

14. Procédé selon la revendication 13, **caractérisé en ce que** des données de mesure de la température actuelle sont traitées dans l'ordinateur pour permettre la commande du dispositif de pliage (37, 38) et/ou de la position du chariot de montage (46).

15. Procédé selon une des revendications 8 à 14, **caractérisé en ce que** la fonction de l'outil (42) est surveillée et que les déviations par rapport à une fonction théorique sont signalisées.
